(19) Europäisches Patentamt / European Patent Office / Office européen des brevets

(11) **EP 3 527 631 A1**

(12) **EUROPEAN PATENT APPLICATION**
published in accordance with Art. 153(4) EPC

(43) Date of publication:
**21.08.2019 Bulletin 2019/34**

(21) Application number: **17820113.3**

(22) Date of filing: **26.06.2017**

(51) Int Cl.:
*C09D 11/037* (2014.01)     *B22F 1/00* (2006.01)
*B22F 1/02* (2006.01)     *B82Y 30/00* (2011.01)
*B82Y 40/00* (2011.01)     *C09D 11/52* (2014.01)
*H01B 1/00* (2006.01)     *H01B 1/22* (2006.01)
*H01B 13/00* (2006.01)

(86) International application number:
**PCT/JP2017/023459**

(87) International publication number:
**WO 2018/003759 (04.01.2018 Gazette 2018/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **27.06.2016 JP 2016126195**

(71) Applicant: **DOWA Electronics Materials Co., Ltd. Tokyo 101-0021 (JP)**

(72) Inventors:
• **SATO Kimitaka**
  **Tokyo 101-0021 (JP)**
• **SAITO Hirotoshi**
  **Tokyo 101-0021 (JP)**

(74) Representative: **Carstens, Dirk Wilhelm Wagner & Geyer Partnerschaft mbB Patent- und Rechtsanwälte Gewürzmühlstraße 5 80538 München (DE)**

(54) **SILVER NANOWIRE INK, PROCESS FOR PRODUCING SAME, AND ELECTROCONDUCTIVE FILM**

(57) To provide a silver nanowire ink, in which a bundle aggregation of wire is difficult to occur in die coater coating, and a transparent conductor having good conductivity can be stably formed. A silver nanowire ink containing a liquid medium containing HEMC (hydroxyethyl methyl cellulose) having dispersed therein silver nanowires covered with a copolymer of vinylpyrrolidone and a hydrophilic monomer, the silver nanowire ink having a content of HEMC in the ink of from 0.01 to 1.0% by mass.

[Fig.2]

EP 3 527 631 A1

**Description**

Technical Field

The present invention relates to a silver nanowire ink that is useful as a material for forming a transparent conductor, and the like, and a conductive film using the same. The invention also relates to a method for producing the silver nanowire ink.

Background Art

In the description herein, fine metal wires having a thickness of approximately 200 nm or less are referred to as "nanowires". A liquid having dispersed therein silver nanowires, having been controlled particularly in the properties thereof, such as the viscosity, in consideration of coating on a substrate is referred to as a "silver nanowire ink". An operation of adding a binder component, a viscosity modifier, and the like to a liquid having dispersed therein silver nanowires, so as to form an ink having prescribed properties is referred to as "ink formation". A conductive film that is a transparent coated film obtained by coating and drying a silver nanowire ink on a substrate, in such a state that the wires are in contact with each other to exhibit conductivity is referred to as a transparent conductor.

Silver nanowires are expected as a conductive material for imparting conductivity to a transparent substrate. By coating a liquid containing silver nanowires (i.e., a silver nanowire ink) on a transparent substrate, such as glass, PET (polyethylene terephthalate), and PC (polycarbonate), followed by removing the liquid component by evaporation or the like, the silver nanowires are in contact with each other on the substrate to form a conductive network, thereby achieving a transparent conductor. According to the progress of studies on the production of thin and long silver nanowires in recent years, a transparent conductor using silver nanowires is being improved in conductivity and optical characteristics.

As a production method of silver nanowires, there has been known a method of dissolving a silver compound in a polyol solvent, such as ethylene glycol, and depositing metallic silver having a linear shape by utilizing the reduction power of the polyol as the solvent, in the presence of a halogen compound, and PVP (polyvinylpyrrolidone) as an organic protective agent. PVP is a substance that is effective as an organic protective agent for synthesizing silver nanowires with good yield. According to the method, silver nanowires having a surface protected by PVP are obtained.

For producing a transparent conductor by using silver nanowires, a step of coating a "silver nanowire ink" on a transparent substrate is necessarily performed. The ordinary silver nanowires covered with PVP show good dispersibility in water, and thus are generally provided as a silver nanowire dispersion liquid using an aqueous dispersion medium. However, it is necessary to improve the wettability thereof to PET (polyethylene terephthalate) frequently used as the transparent substrate, and therefore an alcohol, such as ethanol, isopropyl alcohol (2-propanol), and ethylene glycol, is generally added to the aqueous solvent of the silver nanowire ink. The larger the amount of the alcohol added is, the more the wettability to the PET substrate is improved. However, the addition of the alcohol may cause a problem that the dispersibility of the silver nanowires covered with PVP in the liquid is deteriorated. Specifically, when the amount of the alcohol added to the aqueous solvent is increased, the silver nanowires covered with PVP tend to cause aggregation in the liquid. For improving the dispersibility of the silver nanowire ink using silver nanowires covered with PVP, a method of adding a surfactant, such as a fluorinated, a nonionic, and a cationic, is used. However, the use of the silver nanowire ink containing a surfactant added thereto increases the sheet resistance of the resulting conductive film.

It has separately known that the dispersibility to water and an alcohol can be improved without addition of a surfactant, by using silver nanowires having a surface protected with a copolymer of vinylpyrrolidone and another monomer, rather than PVP (PTLs 1 and 2).

Citation List

Patent Literatures

PTL 1: JP-A-2015-174922
PTL 2: JP-A-2015-180772
PTL 3: JP-A-2009-505358

Summary of Invention

Technical Problem

A die coater method has been known as one of coating methods for forming a thin film by coating a coating material on a substrate. In the production of a transparent conductor using a silver nanowire ink, the die coater coating is a useful method for forming a conductive thin film having a high film thickness accuracy, and has been subjected to practical use. As described above, silver nanowires covered with a copolymer of vinylpyrrolidone and another monomer have been developed as silver nanowires capable of retaining good dispersibility in water and an alcohol without addition of a surfactant, which may be a factor increasing the sheet resistance of the conductive film. However, in the case where a thickener and the like are added to a liquid having dispersed therein the silver nanowires of this type to form an ink, and the ink is subjected to the die coater coating, a portion containing the silver nanowires aggregated in the form of bundles (which may be referred to as a "bundle aggregation") may appear in the resulting transparent conductor in some cases. In other words, the distribution of the silver nanowires tends to be uneven. The bundle aggregation of wires present in the transparent conductor may be visually recognized as white streaks or dots in some cases, which may be a factor of appearance failure of the product. Even in the case where the bundle aggregation of wires is small and cannot be visually recognized, it is not preferred since the bundle aggregation may be a factor increasing the haze of the transparent conductor.

While the reason for the formation of the bundle aggregation of wires is not clear at the present time, it is considered that the influence of the surfactant as a component mixed in the ink is large. In the die coater coating, shear (shearing force) is applied to a fluid in a nozzle, and there is a chance to bring the silver nanowires in the ink close to each other. In the case where a surfactant, such as a fluorinated, a nonionic, and a cationic, is added to the ink, it is considered that the wires having been brought close to each other in the nozzle are discharged on a substrate and relieved from the shear, and simultaneously are immediately separated and dispersed in the liquid coated film to form a transparent conductor having a uniform dispersion state of the wires. However, in the case where the silver nanowire ink, to which the surfactant is not particularly added, is subjected to die coater coating, it is estimated that, when the silver nanowire ink is discharged from the nozzle and relieved from the shear, the separating and dispersing behavior of the wires becomes slightly slowed, and as a result, the formation of the bundle aggregation is facilitated.

In an ink using silver nanowires covered with PVP, HPMC (hydroxypropyl methyl cellulose) or the like is frequently used as a viscosity modifier (see, for example, PTL 3, paragraph 0091). In this case, the problem relating to the bundle aggregation of wires in die coater coating is not particularly conspicuous. It is considered that this is because the addition of the surfactant to the ink eventually prevents the formation of the bundle aggregation. However, the sheet resistance of the conductive film is increased.

An object of the invention is to provide a silver nanowire ink using silver nanowires covered with a copolymer having good dispersibility in water and an alcohol, in which a bundle aggregation of wire is difficult to occur in die coater coating, and a transparent conductor having good conductivity can be stably formed.

Solution to Problem

The object can be achieved by using silver nanowires covered with a copolymer rather than PVP, and adding HEMC (hydroxyethyl methyl cellulose) in the ink formation. Specifically, for achieving the aforementioned objects, the following inventions are described herein.

[1] A silver nanowire ink containing a liquid medium containing HEMC (hydroxyethyl methyl cellulose) having dispersed therein silver nanowires covered with a copolymer of vinylpyrrolidone and a hydrophilic monomer, the silver nanowire ink having a content of HEMC in the ink of from 0.01 to 1.0% by mass.

[2] The silver nanowire ink according to the item [1], wherein the hydrophilic monomer is one kind or two or more kinds of a diallyldimethylammonium salt, ethyl acrylate, 2-hydroxyethyl acrylate, 2-hydropxyethyl methacrylate, 4-hydroxybutyl acrylate, N-methylmaleimide, N-ethylmaleimide, N-propylmaleimide, and N-tert-butylmaleimide.

[3] The silver nanowire ink according to claim 1 or 2, wherein the silver nanowire ink has a mass ratio of HEMC with respect to silver of from 0.0002 to 100.

[4] The silver nanowire ink according to any one of the items [1] to [3], wherein the HEMC has a weight average molecular weight of from 100,000 to 1,200,000.

[5] The silver nanowire ink according to any one of the items [1] to [4], wherein the liquid medium contains the HEMC dissolved in a water solvent, an alcohol solvent, or a mixed solvent of water and an alcohol.

[6] The silver nanowire ink according to any one of the items [1] to [5], wherein the liquid medium contains the HEMC dissolved in a mixed solvent of water and an alcohol having a mass ratio of water and the alcohol in a range of from 70/30 to 99/1.

[7] The silver nanowire ink according to the item [5] or [6], wherein the alcohol is isopropyl alcohol.

[8] The silver nanowire ink according to any one of the items [1] to [7], wherein the liquid medium further contains at least one of a water-soluble acrylic-urethane copolymer resin and a water-soluble urethane resin.

[9] The silver nanowire ink according to the item [8], wherein the silver nanowire ink has a total content of the water-soluble acrylic-urethane copolymer resin and the water-soluble urethane resin in the ink of from 0.01 to 2.0% by mass.

[10] The silver nanowire ink according to any one of the items [1] to [9], wherein the silver nanowires have an average diameter of 50 nm or less and an average length of 10 $\mu$m or more.

[11] The silver nanowire ink according to any one of the items [1] to [10], wherein the silver nanowire ink has a content of the silver nanowires of from 0.01 to 5.0% by mass in terms of mass ratio of metallic silver.

[12] The silver nanowire ink according to any one of the items [1] to [11], wherein the silver nanowire ink is for die coater coating.

Furthermore, the following inventions are described as a method for producing the aforementioned silver nanowire ink.

[13] A method for producing the silver nanowire ink according to any one of the items [1] to [12], including mixing a liquid medium having dispersed therein silver nanowires covered with a copolymer of vinylpyrrolidone and a hydrophilic monomer, and a solvent having dissolved therein HEMC (hydroxyethyl methyl cellulose).

[14] A method for producing the silver nanowire ink according to the item [8] or [9], including mixing a liquid medium having dispersed therein silver nanowires covered with a copolymer of vinylpyrrolidone and a hydrophilic monomer, a solvent having dissolved therein HEMC (hydroxyethyl methyl cellulose), and an emulsion containing at least one of a water-soluble acrylic-urethane copolymer resin and a water-soluble urethane resin.

[15] A conductive film containing the silver nanowire ink according to any one of the items [1] to [12].

Advantageous Effects of Invention

According to the invention, the ink using silver nanowires covered with a copolymer can stably uniformize significantly the dispersion state of wires in a conductive film obtained by die coater coating, without relying on a method of ensuring dispersibility with a surfactant. Accordingly, the problem of appearance failure and increase of haze caused by the bundle aggregation of wires can be solved. Furthermore, a copolymer having hydrophilicity to both water and an alcohol is used as a copolymer covering the wires, and thereby the wettability to a PET substrate and the like can be improved without a surfactant added to the ink, unlike the case where the wires are covered with PVP. Accordingly, the problem of decrease of conductivity of a transparent conductor caused by the use of a surfactant can be solved.

Brief Description of Drawings

Fig. 1 is a structural formula of a vinylpyrrolidone structural unit.
Fig. 2 is an SEM micrograph of the coated film using the silver nanowire ink obtained in Example 1.
Fig. 3 is an SEM micrograph of the coated film using the silver nanowire ink obtained in Comparative Example 1.
Fig. 4 is an SEM micrograph of the coated film using the silver nanowire ink obtained in Example 2.
Fig. 5 is an SEM micrograph of the coated film using the silver nanowire ink obtained in Example 3.
Fig. 6 is an SEM micrograph of the coated film using the silver nanowire ink obtained in Example 4.
Fig. 7 is an SEM micrograph of the coated film using the silver nanowire ink obtained in Example 5.
Fig. 8 is an SEM micrograph of the coated film using the silver nanowire ink obtained in Example 6.
Fig. 9 is an SEM micrograph of the coated film using the silver nanowire ink obtained in Example 7.

Description of Embodiments

Covered Material of Silver Nanowires

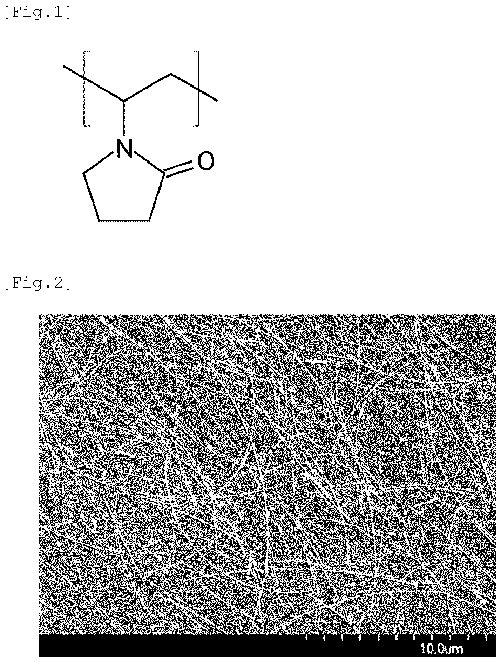

In the description herein, silver nanowires covered with a copolymer of vinylpyrrolidone and a hydrophilic monomer is applied. The copolymer has a vinylpyrrolidone structural unit. Fig. 1 shows a structural formula of a vinylpyrrolidone structural unit. PVP (polyvinylpyrrolidone), which is a homopolymer, has been used as an organic protective agent suitable for the synthesis of practical silver nanowires. As described above, however, there is a disadvantage that the wire dispersibility is deteriorated in a liquid medium containing an alcohol compound added for improving the wettability to a substrate, such as PET. As a result of the various investigations by the inventors, it has been found that the use of a copolymer of vinylpyrrolidone and a monomer other than vinylpyrrolidone can improve the dispersibility in a liquid medium containing an alcohol compound. It has further confirmed that silver nanowires having a thin and long practical shape can be obtained even with the copolymer.

It is important that the copolymer has a structural unit of a hydrophilic monomer. The hydrophilic monomer herein means a monomer that is dissolved in an amount of 1 g or more in 1,000 g of water at 25°C. Specific examples thereof include a diallyldimethylammonium salt monomer, an acrylate or methacrylate monomer, and a maleimide monomer. Examples of the acrylate or methacrylate monomer include ethyl acrylate, 2-hydroxyethyl arylate, and 2-hydroxyethyl methacrylate. Examples of the maleimide monomer include 4-hydroxybutyl acrylate, N-methylmaleimide, N-ethylmaleimide, N-propylmaleimide, and N-tert-butylmaleimide. The silver nanowires covered with a copolymer of vinylpyrrolidone and one kind or two or more kinds of the aforementioned monomers have good dispersion retaining property in a liquid medium containing mainly water and an alcohol. It has been found that the silver nanowires covered with the copolymer of this kind combined with HEMC as an ink component described later are effective for avoiding the bundle aggregation of wires in die coater coating.

Dimension and Shape of Silver Nanowires

The silver nanowires preferably have a shape that is thin and long as much as possible from the standpoint of the formation of a transparent conductive coated film excellent in conductivity and visibility. The silver nanowires preferably have, for example, an average diameter of 50 nm or less and an average length of 10 $\mu$m or more. The silver nanowires having an average diameter of 30 nm or less and an average length of 10 $\mu$m or more are more preferably used. The average aspect ratio is preferably 200 or more, and more preferably 450 or more. The average length can be enhanced by removing short wires by a purification operation. On the other hand, the average diameter is almost determined by whether or not thin wires can be stably synthesized in the reduction deposition reaction. In other words, it is difficult to control the average diameter afterward unless thin wires are synthesized. The use of the copolymer composition described above as an organic protective agent enables the reduction deposition of thin silver nanowires. The average diameter, the average length, and the average aspect ratio are in accordance with the following definitions.

Average Diameter

On a micrograph (such as an FE-SEM micrograph), the average width between the contours on both sides in the thickness direction of one silver nanowire is designated as the diameter of the wire. The value obtained by averaging the diameters of the respective silver nanowires present on the micrograph is designated as the average diameter. For calculating the average diameter, the total number of the wires to be measured is 100 or more.

Average Length

On a micrograph (such as an FE-SEM micrograph), the trace length from one end to the other end of one silver nanowire is designated as the length of the wire. The value obtained by averaging the lengths of the respective silver nanowires present on the micrograph is designated as the average length. For calculating the average length, the total number of the wires to be measured is 100 or more.

The silver nanowires according to the invention are constituted by wires each having an extremely long and thin shape. Accordingly, the recovered silver nanowires each often have a curved string shape rather than a straight rod shape. The lengths of the curved silver nanowires can be measured efficiently by utilizing an image processing software.

Average Aspect Ratio

The average aspect ratio is calculated by substituting the average diameter and the average length for the following expression (2).

```
(average aspect ratio) = (average length (nm)) / (average

    diameter (nm))    (2)
```

Ink Composition

The silver nanowire ink is constituted by a liquid medium and silver nanowires dispersed therein. In the invention, for solving the problem of the bundle aggregation of wires becoming conspicuous in die coater coating (shown above), HEMC (hydroxyethyl methyl cellulose) is added to the liquid medium. HEMC, which is one kind of water-soluble cellulose ethers, has a hydroxyethoxy group (-OCH$_2$CH$_2$OH) in addition to a methoxy group (-OCH$_3$), is soluble in a water solvent, an alcohol solvent, and a mixed solvent of water and an alcohol, and does not have a group that is coordinated to silver, such as a carboxyl group. According to the investigations by the inventors, it has been found that the formation of the bundle aggregation of wires in die coater coating can be effectively inhibited in the case where the wires covered with the copolymer of vinylpyrrolidone and a hydrophilic monomer are used as the silver nanowires, and any of a "water solvent", an "alcohol solvent", and a "mixed solvent of water and an alcohol" having a prescribed amount of HEMC dissolved therein is used as the liquid medium.

With the HEMC content in the ink (i.e., the content ratio of HEMC with respect to the total mass of the ink including the silver nanowires) ensured to be 0.01% by mass or more, the effect of inhibiting the formation of the bundle aggregation of wires in die coater coating can be clearly observed. The HEMC content is more preferably 0.05% by mass or more. HEMC can be utilized as a viscosity modifier for an ink owing to the thickening function thereof. In the case where HEMC is contained in an excessive amount, the ink may have an excessively large viscosity. According to the studies up to the present, the HEMC content in the ink may be controlled within a range of 1.0% by mass or less depending on the content of the silver nanowires, and may be managed to 0.5% by mass or less. The mass ratio of HEMC with respect to silver (which may be hereinafter referred to as an "HEMC/silver ratio") may be controlled in a range of from 0.0002 to 100, and is more preferably in a range of from 0.1 to 10.0. The presence and the content of HEMC in the silver nanowire ink can be determined by analyzing the NMR spectrum. The weight average molecular weight of HEMC used may be, for example, in a range of from 100,000 to 1,200,000. The weight average molecular weight of HEMC can be confirmed, for example, by the GPC-MALS method.

The solvent used for constituting the liquid medium of the ink is preferably any solvent of a water solvent, an alcohol solvent, and a mixed solvent of water and an alcohol. In particular, a solution containing a mixed solvent of water and an alcohol having a mass ratio of water and the alcohol in a range of from 70/30 to 99/1 having dissolved therein HEMC is favorably used for achieving both the dispersibility of the silver nanowires and the wettability to a substrate, such as PET.

The alcohol used as the solvent preferably has polarity with a solubility parameter (SP value) of 10 or more. For example, a low boiling point alcohol, such as methanol, ethanol, and isopropyl alcohol (2-propanol), is preferably used. The SP values are reported to be 23.4 for water, 14.5 for methanol, 12.7 for ethanol, and 11.5 for isopropyl alcohol. The SP values referred herein are values defined by the regular solution theory introduced by Hildebrand.

The liquid medium may further contain a binder component, in addition to HEMC described above. As a binder component that functions as a binder without impairing the dispersibility of the nanowires, and is excellent in conductivity, optical capability, and adhesiveness, for example, at least one of a water-soluble acrylic-urethane copolymer resin and a water-soluble urethane resin may be contained. In the case where the water-soluble acrylic-urethane copolymer resin or the water-soluble urethane resin is contained in the ink, the total content thereof (i.e., the mass ratio with respect to the total mass of the ink including the silver nanowires) may be effective to control, for example, to a range of from 0.01 to 2.0% by mass, and may be controlled to a range of from 0.02 to 0.30% by mass.

Examples of a binder containing the water-soluble acrylic-urethane copolymer resin include "UC90", produced by Alberdingk Boley, Inc., "Adeka Bontighter HUX-401", produced by Adeka Corporation, and "NeoPac™ E-125", produced by DSM Coating Resins, LLC.

Examples of a binder containing the water-soluble urethane resin include Superflex 150HS, Superflex 210, Superflex 300, Superflex 500M, Superflex E-2000, and Superflex R-5002, all produced by DSK Co., Ltd., Hydran AP-30, Hydran WLS-213, Vondic 1980NE, Hydran WLS-602, and Hydran WLS-615, all produced by DIC Corporation, Adeka Bontighter HUX-561S, Adeka Bontighter HUX-350, Adeka Bontighter HUX-282, Adeka Bontighter HUX-830, and Adeka Bontighter HUX-895, all produced by Adeka Corporation, NeoPac™ R-600, NeoPac™ R-650, NeoPac™ R-967, NeoPac™ R-9621, and NeoPac™ R-9330, all produced by DSM Coating Resins, LLC, Resamine D-4090, Resamine D-6065NP, and Resamine D-9087, all produced by Dainichiseika Color & Chemicals Mfg Co., Ltd., Tafigel PUR80, Tafigel PUR41, and Tafigel PUR61, all produced by Munzing Chemie GmbH, and Neostecker 400, Evafanol HA-50C, Evafanol AP-12, and Evafanol APC-55, all produced by Nicca Chemical Co., Ltd.

The content of the silver nanowires in the ink is preferably controlled in a range of from 0.01 to 5.0% by mass in terms of mass ratio of metallic silver occupied in the total mass of the ink.

Viscosity and Surface Tension

The silver nanowire ink is preferably controlled to have a viscosity of from 1 to 200 mPa·s, and more preferably from 3 to 150 mPa·s, by a rotary viscometer at a shear rate of 600 (1/s), and to have a surface tension of from 20 to 70 mN/m, and more preferably from 30 to 60 mN/m, for providing good coating property.

The viscosity can be measured, for example, by using a rotary viscometer, HAAKE RheoStress 600 (measuring cone: Cone C60/1° Ti, D = 60 mm, plate: Meas. Plate cover MPC60), produced by Thermo Scientific, Inc.

The surface tension can be measured by using a full automatic surface tension meter (such as a full automatic surface tension meter, CBVP-Z, produced by Kyowa Interface Science Co., Ltd.).

Method for producing Silver Nanowire Ink

The silver nanowire ink according to the invention can be produced, for example, by the following manner.
Silver nanowires covered with a copolymer of vinylpyrrolidone and a hydrophilic monomer are prepared. The silver nanowires can be synthesized, for example, by the method described in the example later.
The silver nanowires are dispersed in a liquid medium to form a dispersion liquid for forming an ink. The liquid medium used may be the solvent substance for forming the target ink, such as a water solvent, an alcohol solvent, and a mixed solvent of water and an alcohol.
HEMC is added to the dispersion liquid to form an ink. The amount of HEMC added is set to make a prescribed viscosity. However, the entire amount of HEMC may not be immediately dissolved easily. Specifically, in the case where powder of HEMC is added to a solvent, such as water, the surface of the powder that is firstly brought into contact with the solvent is dissolved to form particles having a highly viscous surface, and the particles tends to adhere to each other to form jelly-like particles. Accordingly, it is desirable that HEMC is dissolved in a solvent, such as water, in advance, and the addition of HEMC is performed by mixing the solvent with the silver nanowire dispersion liquid. For example, the aqueous solvent is strongly stirred with a stirrer, and the powder of HEMC is added to the stirred flow. The dissolution of HEMC is performed by continuing the stirring, for example, for 24 hours or more. Thereafter, the jelly-like substance that has not been dissolved is removed by filtering with a metallic mesh having an aperture of 100 $\mu$m. The amount of the HEMC powder added is determined in consideration of the amount thereof removed as the jelly-like substance. The resulting HEMC-containing solution (i.e., the solvent having HEMC dissolved therein) is mixed with the silver nanowire dispersion liquid.
In the ink formation, a binder component may be further added depending on necessity. An emulsion containing a prescribed amount of the binder component may be prepared in advance, and may be mixed with the silver nanowire dispersion liquid. The binder component used may be preferably at least one of a water-soluble acrylic-urethane copolymer resin and a water-soluble urethane resin as described above.
The silver nanowire ink is thus obtained by the aforementioned process.

Production of Transparent Conductor

A transparent conductor can be constructed in such a manner that the silver nanowire ink is coated on a PET film, PC, glass, or the like, which is a transparent substrate, for example, by a die coater method, so as to form a conductive film, from which the liquid component is removed by evaporation or the like to form a dried conductive film.

Examples

Example 1

Synthesis of Silver Nanowires

Silver nanowires were obtained in the following manner.
The following substances were prepared: propylene glycol (1,2-propanediol) as a solvent, a copolymer of vinylpyrrolidone and diallyldimethylammonium nitrate (i.e., a copolymer synthesized with 99% by mass of vinylpyrrolidone and 1% by mass of diallyldimethylammonium nitrate, weight average molecular weight: 130,000) as an organic protective agent, silver nitrate, lithium chloride, potassium bromide, lithium hydroxide, and aluminum nitrate nonahydrate.
At ordinary temperature (23°C), 0.15 g of a propylene glycol solution containing 1% by mass of lithium chloride, 0.10 g of a propylene glycol solution containing 0.25% by mass of potassium bromide, 0.20 g of a propylene glycol solution containing 1% by mass of lithium hydroxide, 0.16 g of a propylene glycol solution containing 2% by mass of aluminum nitrate nonahydrate, and 0.26 g of the copolymer of vinylpyrrolidone and diallyldimethylammonium nitrate were added to 20.0 g of propylene glycol, and were dissolved therein by stirring, so as to provide a solution A. In a separate vessel, 0.21 g of silver nitrate was added and dissolved in 6 g of propylene glycol to provide a solution B. The solution B had a silver nitrate concentration of 0.20 mol/L.
The total amount of the solution A was heated from ordinary temperature to 90°C under stirring with a stirrer coated with a fluorine resin at 300 rpm, and then the total amount of the solution B was added to the solution A over 1 minute. After completing the addition of the solution B, the reaction liquid was continuously stirred at 90°C for 24 hours. Thereafter, the reaction mixture was cooled to ordinary temperature. Silver nanowires were thus formed in this manner. The liquid after completing the synthesis reaction of silver nanowires is referred to as a reaction liquid.

Cleaning

To the reaction liquid thus cooled to ordinary temperature, acetone was added in an amount 20 times the reaction liquid, and the mixture was stirred for 10 minutes and then allowed to stand for 24 hours. After standing, a concentrate and a supernatant were observed, and the supernatant was removed with a pipette to recover the concentrate. The concentrate was added to 100 g of pure water, the mixture was stirred for 10 minutes, then acetone was added to the mixture in an amount of 20 times the total amount of the concentrate and 100 g of pure water, and the mixture was further stirred for 10 minutes and then allowed to stand for 24 hours. After standing, a concentrate and a supernatant were observed, and the supernatant was removed with a pipette to recover the concentrate. The operations of the addition to pure water, the addition of acetone, the standing, and the removal of the supernatant were repeated 10 times. The cleaning was performed in a glass vessel coated with a fluorine resin.

The resulting concentrate was diluted with water containing 1% by mass of PVP (polyvinylpyrrolidone) having a molecular weight of 55,000, so as to control the silver nanowire content to 0.01% by mass. The silver nanowire-containing liquid after cleaning was thus obtained. The silver nanowires were prepared in an amount that was required to make the total amount of 5 L. The silver nanowires after completing the cleaning had an average length of 8.1 $\mu$m, an average diameter of 28.1 nm, and an average aspect ratio of 8,100/28.1 $\approx$ 288.

Crossflow Filtration

The silver nanowire-containing liquid after cleaning (silver nanowire content: 0.01% by mass) was subjected to crossflow filtration using a porous ceramic filter for removing wires having short lengths. The operation is referred to as "purification". The purification was performed by crossflow filtration while replenishing pure water to the circulation flow channel in the same amount as the liquid discharged outside the circulation flow channel. After completing the purification, the crossflow filtration was performed for a certain period of time in the state that the replenishment of pure water was terminated, so as to increase the silver nanowire content in the liquid to 1% by mass. According to the manner, a silver nanowire dispersion liquid having silver nanowires dispersed in pure water was obtained. The silver nanowires in the dispersion liquid had an average length of 14.6 $\mu$m, an average diameter of 28.9 nm, and an average aspect ratio of 14,600/28.9 $\approx$ 505.

Ink Formation

HEMC (hydroxyethyl methyl cellulose having a weight average molecular weight of 910,000 (produced by Tomoe Engineering Co., Ltd.)) was prepared. Powder of HEMC was added to pure water under strong stirring with a stirrer, and then the strong stirring was continued for 24 hours. The liquid after stirring was filtered with a metallic mesh having an aperture of 100 $\mu$m to remove gelled insoluble components, thereby providing an aqueous solution having HEMC dissolved therein.

An emulsion of a water-soluble acrylic-urethane copolymer resin (NeoPac™ E-125, produced by DSM Coating Resins, LLC) was prepared as a binder.

In one vessel with a lid, the silver nanowire dispersion liquid (containing water as a medium) obtained by the aforementioned crossflow filtration, the HEMC aqueous solution, the water-soluble acrylic-urethane copolymer resin emulsion, and isopropyl alcohol were placed, and after closing the lid, were mixed by agitation by a method of shaking the vessel vertically 100 times. The amounts of the substances mixed were controlled to make the composition of the mixture having a mass ratio of water/isopropyl alcohol of 80/20, and the amounts with respect to the total amount of the mixture of 0.30% by mass for the HEMC component, 0.15% by mass for the water-soluble acrylic-urethane copolymer resin component, and 0.15% by mass in terms of metallic silver for the silver nanowires. The mass ratio of HEMC/silver was 2.0. A silver nanowire ink was thus obtained in this manner. The silver nanowire ink had a viscosity of 33.1 mPa·s at a shear rate of 600 (1/s) and a surface tension of 32.3 mN/m.

Transparent Conductor

The silver nanowire ink was coated on a surface of a PET film substrate (Lumirror U48, produced by Toray Industries, Inc.) having a thickness of 100 $\mu$m and a dimension of 150 mm $\times$ 200 mm with a die coater (New Taku-Die S-100, produced by Die Gage Corporation), so as to form a coated film (conductive film) having an area of 100 mm $\times$ 100 mm. The coating conditions were as follows: wet thickness: 11 $\mu$m, gap: 21 $\mu$m, speed: 10 mm/s, timer: 2.2 s, and coating length: 100 mm. After coating, the coated film was dried at 120°C for 1 minute to provide a transparent dried coated film (dried conductive film).

The dried coated film was observed with a high resolution FE-SEM (field emission scanning electron microscope) . As a result, there was no tendency of formation of a bundle aggregation of the silver nanowires. Fig. 2 shows an example of the SEM micrograph. The dried coated film had no white streak or dot recognized by visual observation, and thus a transparent dried coated film having good quality excellent in visibility was obtained. The dried coated film was measured for the surface resistance (sheet resistance) with Loresta GP MCP-T610 with an ESP probe, produced by Mitsubishi Chemical Analytech Co., Ltd. As a result, the surface resistance (sheet resistance) was 48 $\Omega$/sq. Thus, a transparent conductor excellent in both conductivity and visibility was obtained.

Comparative Example 1

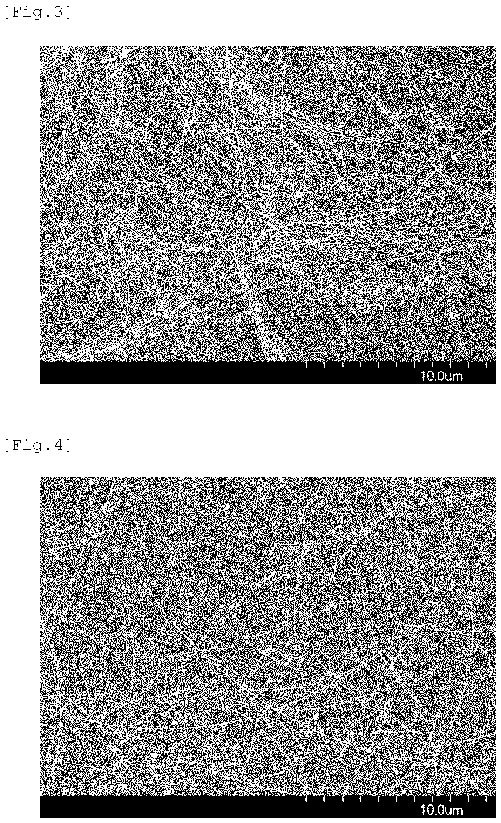

An experiment was performed under the same conditions as in Example 1 except that HPMC (hydroxypropyl methyl cellulose, produced by Alfa Aesar Company) was used instead of HEMC in the ink formation in Example 1. The composition of the silver nanowire ink had a mass ratio of water/isopropyl alcohol of 80/20, and the amounts with respect to the total amount of the mixture of 0.30% by mass for the HPMC component, 0.15% by mass for the water-soluble acrylic-urethane copolymer resin component, and 0.15% by mass in terms of metallic silver for the silver nanowires, by controlling the amounts of the substances mixed. The mass ratio of HPMC/silver was 2.0. The silver nanowire ink had a viscosity of 14.5 mPa·s at a shear rate of 600 (1/s) and a surface tension of 31.8 mN/m.
The dried coated film was observed with a high resolution FE-SEM (field emission scanning electron microscope), and as a result, there was a tendency of formation of a bundle aggregation of the silver nanowires. Fig. 3 shows an example of the SEM micrograph. The dried coated film had white streaks or dots due to the bundle aggregation of wires, recognized by visual observation, and thus was clearly inferior in visibility to the dried coated film of Example 1. The surface resistance (sheet resistance) of this dried coated film was 52 $\Omega$/sq.

Comparative Example 2

An experiment was performed under the same conditions as in Example 1 except that CMC (carboxymethyl cellulose sodium, produced by Dai-ichi Kogyo Seiyaku Co., Ltd.) was used instead of HEMC in the ink formation in Example 1. The composition of the silver nanowire ink had a mass ratio of water/isopropyl alcohol of 80/20, and the amounts with respect to the total amount of the mixture of 0.30% by mass for the CMC component, 0.15% by mass for the water-soluble acrylic-urethane copolymer resin component, and 0.15% by mass in terms of metallic silver for the silver nanowires, by controlling the amounts of the substances mixed. The mass ratio of CMC/silver was 2.0. The silver nanowire ink had a viscosity of 12.1 mPa·s at a shear rate of 600 (1/s) and a surface tension of 31.9 mN/m. The formation of a coated film with a die coater was not performed since the silver nanowire ink contained a large amount of the aggregate of wires found therein.

Example 2

Synthesis of Silver Nanowires

A copolymer composition constituted by a copolymer of vinylpyrrolidone and diallyldimethylammonium nitrate was prepared as an organic protective agent. The copolymer had a polymerization composition with 99% by mass of vinylpyrrolidone and 1% by mass of diallyldimethylammonium nitrate. The weight average molecular weight Mw thereof was 92,000.
At ordinary temperature, 4.84 g of a propylene glycol solution containing 10% by mass of lithium chloride, 0.1037 g of potassium bromide, 0.426 g of lithium hydroxide, 4.994 g of a propylene glycol solution containing 20% by mass of aluminum nitrate nonahydrate, and 83.875 g of the copolymer of vinylpyrrolidone and diallyldimethylammonium nitrate were added to 8,116.3 g of propylene glycol, and were dissolved therein by stirring, so as to provide a solution A. In a separate vessel, 67.96 g of silver nitrate was dissolved in a mixed solution of 95.70 g of propylene glycol and 8.00 g of pure water by stirring at 35°C, so as to provide a solution B.
The solution A was placed in a reaction vessel and heated from ordinary temperature to 90°C under stirring at a rotation number of 175 rpm, and then the total amount of the solution B was added to the solution A from two addition ports over 1 minute. After completing the addition of the solution B, the reaction liquid was continuously stirred at 90°C for 24 hours. Thereafter, the reaction liquid was cooled to ordinary temperature to synthesize silver nanowires.

Cleaning

A 1 L portion was collected from the aforementioned reaction liquid (i.e., the liquid containing the synthesized silver nanowires) having been cooled to ordinary temperature, and transferred to a tank having a capacity of 35 L coated with PFA. Thereafter, 20 kg of acetone was added thereto, and the mixture was stirred for 15 minutes, and then allowed to stand for 24 hours to perform spontaneous sedimentation of the concentrate. Thereafter, the supernatant was removed, and the concentrate was recovered. To the resulting concentrate, 20 g of a PVP aqueous solution having dissolved therein PVP having a weight average molecular weight of 55,000 in an amount of 2% by mass was added, and the mixture was stirred for 3 hours to redisperse the silver nanowires. 2 kg of acetone was added to the redispersed silver nanowire dispersion liquid, and the mixture was stirred for 10 minutes, and then allowed to stand to perform spontaneous sedimentation of the concentrate. Thereafter, the supernatant was removed for the second time to provide a concentrate. 160 g of pure water was added to the resulting concentrate to redisperse the silver nanowires. 2 kg of acetone was added to the redispersed silver nanowire dispersion liquid, and the mixture was stirred for 30 minutes, and then allowed to stand to perform spontaneous sedimentation of the concentrate. Thereafter, the supernatant was removed for the third time to provide a concentrate. 320 g of a 0.5% by mass PVP aqueous solution having a weight average molecular weight of 55,000 was added to the resulting concentrate, followed by stirring for 12 hours, to provide a "dispersion liquid after cleaning".

Crossflow Filtration

The dispersion liquid after cleaning was diluted with pure water to provide a silver nanowire dispersion liquid having a silver nanowire concentration of 0.07% by mass. The dispersion liquid was subjected to crossflow filtration by using a tube of a porous ceramic filter. The ceramic filter used herein had an average pore diameter of 5.9 $\mu$m.

Specifically, by setting the liquid amount of the entire circulation system including the silver nanowire dispersion liquid to 52 L, and setting the flow rate of the liquid to 150 L/min, the dispersion liquid was circulated for 12 hours while replenishing pure water to the tank in an equivalent amount to the liquid amount discharged as a filtrate, so as to provide a "dispersion liquid after replenishing purification". Subsequently, the crossflow filtration was continued for 12 hours in the state that the replenishment of pure water was terminated, so as to concentrate the silver nanowire dispersion liquid by utilizing the phenomenon that the liquid amount was gradually decreased through discharge of the filtrate. Thus, a "dispersion liquid after concentrating purification" was obtained.

A small amount of a specimen was collected from the dispersion liquid after concentrating purification, and after evaporating water of the dispersion liquid on an observation table, was observed with a high-resolution FE-SEM (high-resolution field emission scanning microscope), resulting in that the silver nanowires had an average length of 24.5 $\mu$m, an average diameter of 25.9 nm, and an average aspect ratio of $24,500/25.9 \approx 946$.

Ink Formation

A silver nanowire ink was produced by mixing and stirring the substances in the same manner as in Example 1. The amounts of the substances mixed were controlled to make the composition of the mixture having a mass ratio of water/isopropyl alcohol of 80/20, and the amounts with respect to the total amount of the mixture of 0.30% by mass for the HEMC component, 0% by mass for the water-soluble acrylic-urethane copolymer resin component (not added), and 0.15% by mass in terms of metallic silver for the silver nanowires. The mass ratio of HEMC/silver was 2.0. The resulting silver nanowire ink had a viscosity of 30.4 mPa·s at a shear rate of 600 (1/s) and a surface tension of 31.1 mN/m.

Transparent Conductor

The silver nanowire ink was coated on a bare surface (having no readily adhesive layer formed thereon) of a PET film substrate (Cosmoshine (trade name) A4100, produced by Toyobo Co., Ltd., transmittance: 90.2%, haze: 0.6%) having a thickness of 100 $\mu$m and a size of 150 mm $\times$ 200 mm with a die coater (New Taku-Die S-100, produced by Die Gage Corporation), so as to form a coated film (conductive film) having an area of 100 mm $\times$ 100 mm. The coating conditions were as follows: wet thickness: 20 $\mu$m, gap: 40 $\mu$m, speed: 10 mm/s, timer: 2.2 s, and coating length: 100 mm. After coating, the coated film was dried at 120°C for 1 minute to provide a transparent dried coated film (dried conductive film).

The dried coated film was observed with a high resolution FE-SEM (field emission scanning electron microscope) . As a result, there was no tendency of formation of a bundle aggregation of the silver nanowires. Fig. 4 shows an example of the SEM micrograph. The dried coated film had no white streak or dot recognized by visual observation, and thus a transparent dried coated film having good quality excellent in visibility was obtained.

The dried coated film was measured for the sheet resistance with Loresta GP MCP-T610 with an ESP probe, produced by Mitsubishi Chemical Analytech Co., Ltd. The dried coated film was measured for the total light transmittance with Hazemeter NDH 5000, produced by Nippon Denshoku Industries Co., Ltd. For avoiding the influence of the PET substrate from the values of the total light transmittance and the haze, the value obtained by (total light transmittance including substrate) + (100% - (transmittance of only substrate)) was used for the total light transmittance, and the value obtained by (haze including substrate) - (haze of only substrate) was used for the haze. As a result of the measurement, the transparent conductor having the dried coated film had a surface resistance (sheet resistance) of 44 $\Omega$/sq, a haze

of 1.0%, and a total light transmittance of 99.4%.

Example 3

A transparent conductor was produced by forming an ink with the silver nanowire dispersion liquid (i.e., the dispersion liquid after concentrating purification) obtained in Example 2.

Ink Formation

A silver nanowire ink was produced in the same manner as in Example 2. The amounts of the substances mixed were controlled to make the composition of the mixture having a mass ratio of water/isopropyl alcohol of 80/20, and the amounts with respect to the total amount of the mixture of 0.10% by mass for the HEMC component, 0.05% by mass for the water-soluble acrylic-urethane copolymer resin component, and 0.10% by mass in terms of metallic silver for the silver nanowires. The mass ratio of HEMC/silver was 1.0. The resulting silver nanowire ink had a viscosity of 7.7 mPa·s at a shear rate of 600 (1/s) and a surface tension of 32.1 mN/m.

Transparent Conductor

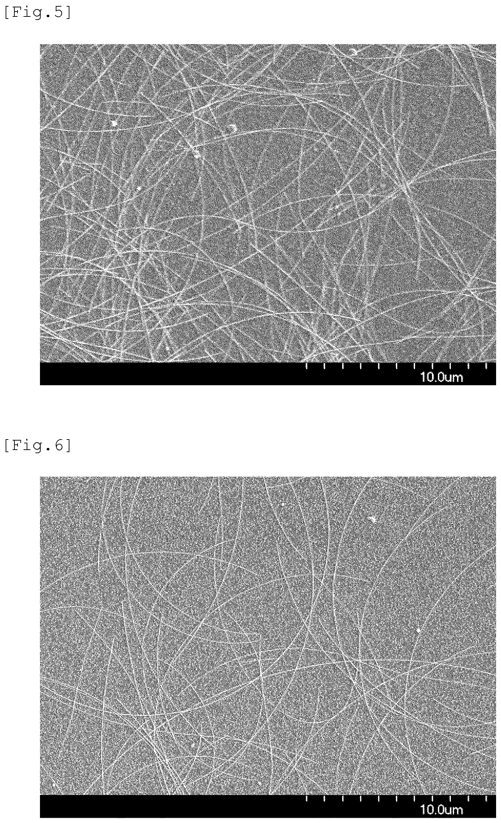

A transparent dried coated film was produced by using the aforementioned silver nanowire ink in the same manner as in Example 2, and subjected to the observation with a high resolution FE-SEM and the measurement of the surface resistance, the haze, and the total light transmittance, under the same conditions as in Example 2. Fig. 5 shows an example of the SEM micrograph. There was no tendency of formation of a bundle aggregation of the silver nanowires. The dried coated film had no white streak or dot recognized by visual observation, and thus a transparent dried coated film having good quality excellent in visibility was obtained. The transparent conductor having the dried coated film had a surface resistance (sheet resistance) of 49 Ω/sq, a haze of 1.0%, and a total light transmittance of 97.9%.

Example 4

A transparent conductor was produced by forming an ink with the silver nanowire dispersion liquid (i.e., the dispersion liquid after concentrating purification) obtained in Example 2.

Ink Formation

A silver nanowire ink was produced in the same manner as in Example 2. The amounts of the substances mixed were controlled to make the composition of the mixture having a mass ratio of water/isopropyl alcohol of 80/20, and the amounts with respect to the total amount of the mixture of 0.05% by mass for the HEMC component, 0.05% by mass for the water-soluble acrylic-urethane copolymer resin component, and 0.10% by mass in terms of metallic silver for the silver nanowires. The mass ratio of HEMC/silver was 0.5. The resulting silver nanowire ink had a viscosity of 5.9 mPa·s at a shear rate of 600 (1/s) and a surface tension of 32.2 mN/m.

Transparent Conductor

A transparent dried coated film was produced by using the aforementioned silver nanowire ink in the same manner as in Example 2, and subjected to the observation with a high resolution FE-SEM and the measurement of the surface resistance, the haze, and the total light transmittance, under the same conditions as in Example 2. Fig. 6 shows an example of the SEM micrograph. There was no tendency of formation of a bundle aggregation of the silver nanowires. The dried coated film had no white streak or dot recognized by visual observation, and thus a transparent dried coated film having good quality excellent in visibility was obtained. The transparent conductor having the dried coated film had a surface resistance (sheet resistance) of 54 Ω/sq, a haze of 0.9%, and a total light transmittance of 99.4%.

Example 5

A transparent conductor was produced by forming an ink with the silver nanowire dispersion liquid (i.e., the dispersion liquid after concentrating purification) obtained in Example 2.

Ink Formation

A silver nanowire ink was produced in the same manner as in Example 2. The amounts of the substances mixed were controlled to make the composition of the mixture having a mass ratio of water/isopropyl alcohol of 80/20, and the amounts with respect to the total amount of the mixture of 0.02% by mass for the HEMC component, 0.05% by mass for the water-soluble acrylic-urethane copolymer resin component, and 0.10% by mass in terms of metallic silver for the silver nanowires. The mass ratio of HEMC/silver was 0.2. The resulting silver nanowire ink had a viscosity of 4.4 mPa·s at a shear rate of 600 (1/s) and a surface tension of 31.3 mN/m.

Transparent Conductor

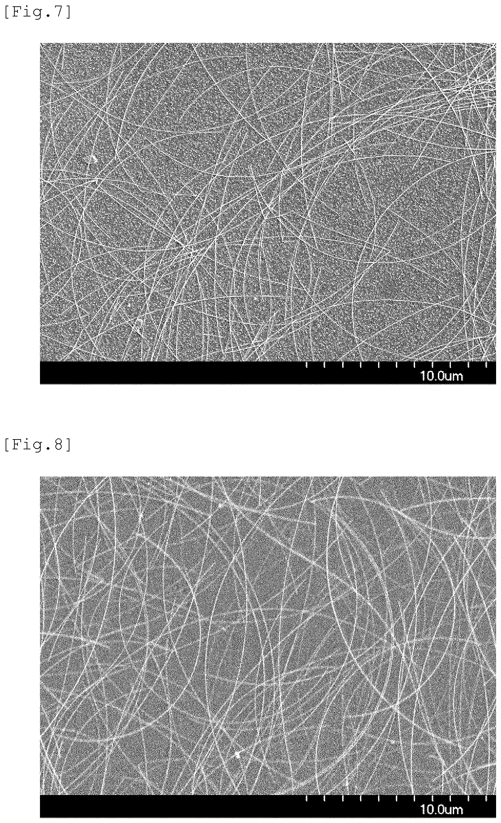

A transparent dried coated film was produced by using the aforementioned silver nanowire ink in the same manner as in Example 2 except that the wet thickness in the coating condition was increased to 27 μm, and subjected to the observation with a high resolution FE-SEM and the measurement of the surface resistance, the haze, and the total light transmittance, under the same conditions as in Example 2. Fig. 7 shows an example of the SEM micrograph. There was no tendency of formation of a bundle aggregation of the silver nanowires. The dried coated film had no white streak or dot recognized by visual observation, and thus a transparent dried coated film having good quality excellent in visibility was obtained. The transparent conductor having the dried coated film had a surface resistance (sheet resistance) of 52 Ω/sq, a haze of 1.8%, and a total light transmittance of 99.2%.

Example 6

A transparent conductor was produced by forming an ink with the silver nanowire dispersion liquid (i.e., the dispersion liquid after concentrating purification) obtained in Example 2.

Ink Formation

A silver nanowire ink was produced in the same manner as in Example 2. The amounts of the substances mixed were controlled to make the composition of the mixture having a mass ratio of water/isopropyl alcohol of 80/20, and the amounts with respect to the total amount of the mixture of 0.50% by mass for the HEMC component, 0.05% by mass for the water-soluble acrylic-urethane copolymer resin component, and 0.10% by mass in terms of metallic silver for the silver nanowires. The mass ratio of HEMC/silver was 5.0. The resulting silver nanowire ink had a viscosity of 72.5 mPa·s at a shear rate of 600 (1/s) and a surface tension of 31.0 mN/m.

Transparent Conductor

A transparent dried coated film was produced by using the aforementioned silver nanowire ink in the same manner as in Example 2 except that the wet thickness in the coating condition was 24 μm, and subjected to the observation with a high resolution FE-SEM and the measurement of the surface resistance, the haze, and the total light transmittance, under the same conditions as in Example 2. Fig. 8 shows an example of the SEM micrograph. There was no tendency of formation of a bundle aggregation of the silver nanowires. The dried coated film had no white streak or dot recognized by visual observation, and thus a transparent dried coated film having good quality excellent in visibility was obtained. The transparent conductor having the dried coated film had a surface resistance (sheet resistance) of 51 Ω/sq, a haze of 1.1%, and a total light transmittance of 99.4%.

Example 7

A transparent conductor was produced by forming an ink with the silver nanowire dispersion liquid (i.e., the dispersion liquid after concentrating purification) obtained in Example 2.

Ink Formation

A silver nanowire ink was produced in the same manner as in Example 2. The amounts of the substances mixed were controlled to make the composition of the mixture having a mass ratio of water/isopropyl alcohol of 80/20, and the amounts with respect to the total amount of the mixture of 0.75% by mass for the HEMC component, 0.05% by mass for the water-soluble acrylic-urethane copolymer resin component, and 0.10% by mass in terms of metallic silver for the silver nanowires. The mass ratio of HEMC/silver was 7.5. The resulting silver nanowire ink had a viscosity of 146.4 mPa·s at a shear rate of 600 (1/s) and a surface tension of 32.3 mN/m.

Transparent Conductor

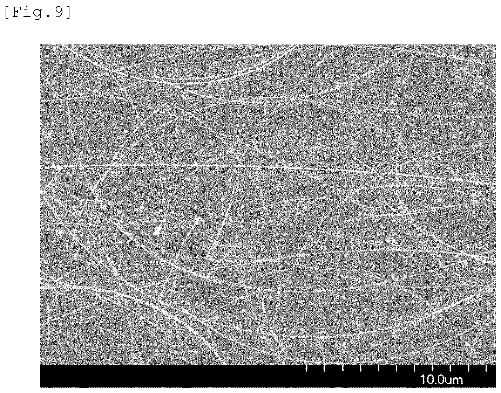

A transparent dried coated film was produced by using the aforementioned silver nanowire ink in the same manner as in Example 2 except that the wet thickness in the coating condition was 24 μm, and subjected to the observation with a high resolution FE-SEM and the measurement of the surface resistance, the haze, and the total light transmittance, under the same conditions as in Example 2. Fig. 9 shows an example of the SEM micrograph. There was no tendency of formation of a bundle aggregation of the silver nanowires. The dried coated film had no white streak or dot recognized by visual observation, and thus a transparent dried coated film having good quality excellent in visibility was obtained. The transparent conductor having the dried coated film had a surface resistance (sheet resistance) of 93 Ω/sq, a haze of 1.0%, and a total light transmittance of 99.4%.

**Claims**

1.   A silver nanowire ink comprising a liquid medium containing HEMC (hydroxyethyl methyl cellulose) having dispersed therein silver nanowires covered with a copolymer of vinylpyrrolidone and a hydrophilic monomer, the silver nanowire ink having a content of HEMC in the ink of from 0.01 to 1.0% by mass.

2.   The silver nanowire ink according to claim 1, wherein the hydrophilic monomer is one kind or two or more kinds of a diallyldimethylammonium salt, ethyl acrylate, 2-hydroxyethyl acrylate, 2-hydroxyethyl methacrylate, 4-hydroxybutyl acrylate, N-methylmaleimide, N-ethylmaleimide, N-propylmaleimide, and N-tert-butylmaleimide.

3.   The silver nanowire ink according to claim 1, wherein the silver nanowire ink has a mass ratio of HEMC with respect to silver of from 0.0002 to 100.

4.   The silver nanowire ink according to claim 1, wherein the HEMC has a weight average molecular weight of from 100,000 to 1,200,000.

5.    The silver nanowire ink according to claim 1, wherein the liquid medium contains the HEMC dissolved in a water solvent, an alcohol solvent, or a mixed solvent of water and an alcohol.

6.   The silver nanowire ink according to claim 1, wherein the liquid medium contains the HEMC dissolved in a mixed solvent of water and an alcohol having a mass ratio of water and the alcohol in a range of from 70/30 to 99/1.

7.   The silver nanowire ink according to claim 5, wherein the alcohol is isopropyl alcohol.

8.   The silver nanowire ink according to claim 1, wherein the liquid medium further contains at least one of a water-soluble acrylic-urethane copolymer resin and a water-soluble urethane resin.

9.   The silver nanowire ink according to claim 8, wherein the silver nanowire ink has a total content of the water-soluble acrylic-urethane copolymer resin and the water-soluble urethane resin in the ink of from 0.01 to 2.0% by mass.

10.  The silver nanowire ink according to claim 1, wherein the silver nanowires have an average diameter of 50 nm or less and an average length of 10 μm or more.

11.  The silver nanowire ink according to claim 1, wherein the silver nanowire ink has a content of the silver nanowires of from 0.01 to 5.0% by mass in terms of mass ratio of metallic silver.

12.  The silver nanowire ink according to claim 1, wherein the silver nanowire ink is for die coater coating.

13.  A method for producing the silver nanowire ink according to claim 1, comprising mixing a liquid medium having dispersed therein silver nanowires covered with a copolymer of vinylpyrrolidone and a hydrophilic monomer, and a solvent having dissolved therein HEMC (hydroxyethyl methyl cellulose).

14.  A method for producing the silver nanowire ink according to claim 8, comprising mixing a liquid medium having dispersed therein silver nanowires covered with a copolymer of vinylpyrrolidone and a hydrophilic monomer, a solvent having dissolved therein HEMC (hydroxyethyl methyl cellulose), and an emulsion containing at least one of a water-soluble acrylic-urethane copolymer resin and a water-soluble urethane resin.

**15.** A conductive film comprising the silver nanowire ink according to claim 1.

[Fig.1]

[Fig.2]

[Fig.3]

[Fig.4]

[Fig.5]

[Fig.6]

[Fig.7]

[Fig.8]

[Fig.9]

## INTERNATIONAL SEARCH REPORT

<table>
<tr><td></td><td>International application No.<br>PCT/JP2017/023459</td></tr>
</table>

A. CLASSIFICATION OF SUBJECT MATTER
*C09D11/037*(2014.01)i, *B22F1/00*(2006.01)i, *B22F1/02*(2006.01)i, *B82Y30/00* (2011.01)i, *B82Y40/00*(2011.01)i, *C09D11/52*(2014.01)i, *H01B1/00*(2006.01)i, *H01B1/22*(2006.01)i, *H01B13/00*(2006.01)i
According to International Patent Classification (IPC) or to both national classification and IPC

B. FIELDS SEARCHED

Minimum documentation searched (classification system followed by classification symbols)
C09D11/037, B22F1/00, B22F1/02, B82Y30/00, B82Y40/00, C09D11/52, H01B1/00, H01B1/22, H01B13/00

Documentation searched other than minimum documentation to the extent that such documents are included in the fields searched
Jitsuyo Shinan Koho          1922–1996   Jitsuyo Shinan Toroku Koho   1996–2017
Kokai Jitsuyo Shinan Koho    1971–2017   Toroku Jitsuyo Shinan Koho   1994–2017

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2015/133453 A1  (Dowa Holdings Co., Ltd.), 11 September 2015 (11.09.2015), entire text; all drawings & JP 2015-180772 A      & US 2016/0368049 A1 Whole Documents & EP 3115135 A1          & CN 106068166 A & KR 10-2016-0129895 A  & TW 201544610 A | 1–15 |
| A | WO 2015/008676 A1  (Seiko PMC Corp.), 22 January 2015 (22.01.2015), entire text (Family: none) | 1–15 |

☒  Further documents are listed in the continuation of Box C.          ☐   See patent family annex.

| * | Special categories of cited documents: |
|---|---|
| "A" | document defining the general state of the art which is not considered    to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

Date of the actual completion of the international search
    10 August 2017 (10.08.17)

Date of mailing of the international search report
    22 August 2017 (22.08.17)

Name and mailing address of the ISA/
    Japan Patent Office
    3-4-3,Kasumigaseki,Chiyoda-ku,
    Tokyo 100-8915,Japan

Authorized officer

Telephone No.

Form PCT/ISA/210 (second sheet) (January 2015)

<table>
<tr><td colspan="2" style="text-align:center">**INTERNATIONAL SEARCH REPORT**</td><td>International application No.<br>PCT/JP2017/023459</td></tr>
</table>

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2010-244747 A  (Konica Minolta Holdings, Inc.),<br>28 October 2010 (28.10.2010),<br>entire text; all drawings<br>& US 2010/0255323 A1<br>Whole Documents | 1-15 |
| A | JP 2013-544917 A  (Cambrios Technologies Corp.),<br>19 December 2013 (19.12.2013),<br>entire text; all drawings<br>& US 2012/0097059 A1<br>Whole Documents<br>& WO 2012/082228 A1     & EP 2630207 A1<br>& TW 201224072 A       & SG 189953 A<br>& CN 103443213 A       & KR 10-2013-0132800 A | 1-15 |
| A | JP 2015-518063 A  (Seashell Technology, LLC),<br>25 June 2015 (25.06.2015),<br>entire text; all drawings<br>& US 2013/0266795 A1<br>Whole Documents<br>& WO 2013/142440 A2     & EP 2828861 A2<br>& CN 104321828 A       & KR 10-2014-0139015 A<br>& RU 2014141995 A | 1-15 |
| A | JP 2001-093414 A  (Asahi Glass Co., Ltd.),<br>06 April 2001 (06.04.2001),<br>entire text; all drawings<br>(Family: none) | 1-15 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015174922 A
- JP 2015180772 A
- JP 2009505358 A